# EUROPEAN PATENT APPLICATION

(11) **EP 2 455 861 A1**
(43) Date of publication of application: **23.05.2012**
(21) Application number: 11164500.8
(22) Date of filing: 02.05.2011
(51) Int. Cl.: G06F 9/54

(54) **System and method for delta change synchronization**

(30) Priority: 18.11.2010 IN MU31482010
(71) Applicant: Zensar Technologies Ltd, 411 014 Maharashtra (IN)
(72) Inventor: Gaikwad, Vijaykumar, Pune 411 013, Maharashtra (IN)
(74) Representative: Capasso, Olga

(57) **Abstract**

A system and method for delta change synchronization have been disclosed. The system performs delta change synchronization by transferring between two or multiple nodes an initial model and further rendering only the changed objects model-object architecture. The nodes are provided with delta change processing sub-system which mainly includes a delta recorder means for recording the changes in the objects of the main model and renders them to other nodes.

## Description

### FIELD OF THE INVENTION

The present invention relates to the field of Computers.

Particularly, the invention relates to data communication using computers.

### DEFINITIONS

The term **"object"** used in the specification refers to complex data structures, or abstract data types containing base level information of any application, OS, application files, system files and combinations thereof.

The term **"model"** used in the specification refers group of the objects corresponding to specified content.

The term **"content"** used in the specification refers to any system file, application file, application, system program, process, thread, cookie and the like.

These definitions are in addition to those expressed in the art.

### BACKGROUND OF THE INVENTION

Modeling technology in software / Information Technology domain uses data structures and graphical representation of "model and display" symbol, which gives meaning to model representation along with profile description specifying necessary detail about the model to allow individual model elements of the similar type to be represented uniquely. Such models can be represented by abstract data types: for instance Link lists, Stacks, and Tree structures. Meta Modeling which is in modeling is represented for suitable automatic processing by computers for the purpose of interpretation and model transformation, in line with regenerative development principles.

Such models can be represented on a computer's (sender and originator or master computer) display (LCD and other variants) in typical pixel format and can be used to transmit, with a suitable utility program, data (particularly screen data) to other computers (Receivers) connected through LAN /WAN or similar networks with suitable screen rendering systems; for instance Net meeting, Webex and the like. But, in the case of huge networks and when communication is desired over the large distances optimal performance is not attained.

The amount of data transferred for every change in the source screen remains large as it is pixel-information and ends up requiring higher bandwidth to keep reasonable response time for update or in the case of limited bandwidth slows down update on the receiver side computer to a large extent thereby reducing real-time sync. This is a serious problem in communication in geographically distributed systems.

All the available techniques and systems mainly focus on transferring the screen data as image and video either as it is or after compression. For instance, the United States Patent application 200410042547 discloses a method and apparatus for digitizing and compressing video signals for transmitting the signals between a remotely located computer and a host or local computer. The digitization and compression is done by dividing frame buffers into cells and comparing image data from previously captured frame buffers to create synchronized video signals and transmit the video signals over an extended range by limiting the portions of the transmission bandwidth of pixel data transferred between the remote computer and the local computer.

Thus, there is felt a need for a system which
■ transfers the base level information of any application, OS, system application, and files;
■ which is not limited to transfer of the image or video signals for remote screen sharing;
■ can reduce the size of the data to be transferred in remote during collaboration;
■ can provide real time or near real time updates on the receiver's machine; and
■ is time efficient, cost efficient and space efficient.

### OBJECTS OF THE INVENTION

It is an object of the present invention to provide a system and method which transfers the base level information of any application, OS, system application, and files to a remote node.

It is another object of the present invention to provide a system and method which is not limited to transfer of the image or video signals for remote screen sharing.

It is yet another object of the present invention to provide a system and method which can reduce the size of the data to be transferred in remote collaboration.

It is still another object of the present invention to provide a system and method which can provide real time or near real time updates on the receiver's machine.

One more object of the present invention is to provide a time efficient, cost efficient and space efficient system for remote collaboration.

### SUMMARY OF THE INVENTION

The present invention envisages a system for delta change synchronization, the system comprising a plurality nodes, characterized in that each of the plurality of nodes is provided with
■ collaborative means adapted to establish a model-object collaboration session with remainder of the plurality of nodes via a network using a server;
■ model generator adapted to generate an initial model comprising objects associated with content, wherein the content is selected from the group consisting of operating system programs, operating system files, means programs, means files, images, videos and combinations thereof;
■ rendering means adapted to render the model to the remainder of the plurality of nodes;
■ content reproducer means adapted to co-operate with the collaborative means to reproduce the content;
■ a delta change processing sub-system comprising:
   ● delta recorder means adapted to record the changes in a first node in at least some of the objects of the model in the first node on occurrence of predefined events;
   ● change rendering means adapted to render the objects corresponding to the changes to at least one of the remainder of the plurality of nodes selectively;
   ● modifying means adapted to modify the model, on the at least one remainder node, by replacing the objects that have changed with the objects rendered by the first node; and
   ● applicator means adapted to apply the changes to the content corresponding to the model with replaced objects in the at least one remainder node.

Typically, the objects contain base level information of the content, the base level information including complex data structures, abstract data types, binary tree structure, linked lists, stacks, queues, functions, RGB information, display information and any combinations thereof.

Typically, the rendering means associated with each of the plurality of node includes first transmission means adapted to transmit the model to remainder or the plurality of nodes. Typically, the content reproducer means associated with each of the plurality of nodes includes first receiving means adapted to receive the transmitted model, transmitted by a different node.

Typically, the change rendering means associated with each of the plurality of nodes includes second transmission means adapted to transmit the objects corresponding to the changes from a node to remainder of the plurality of nodes.

Typically, the modifying means associated with each of the plurality of nodes includes second receiving means adapted to receive the transmitted objects, transmitted by a different node.

Typically, the collaborative means is an application characterized in that node authentication means is adapted to authenticate a node before establishing a model-object collaboration session.

Preferably, the plurality of nodes form a host-client architecture.

Typically, at any instance the node which renders the model or the objects corresponding to the changes is the host nodes and the remainder of the plurality of nodes are the client nodes.

Typically, the predefined events are changes occurring due to activities, performed by a node, to modify the content.

Alternately, the predefined events are selected from the group consisting of on click event, on scroll event, on drag event, text select event and combinations thereof.

Each of the plurality of nodes are selected from the group consisting of Computers, Mobile Phones, PDAs, iPODs, iPADs, Tablet Computers, Laptops, Pagers and combinations thereof.

Typically, the network is selected from the group consisting of LAN, MAN, WAN and combinations thereof.

Preferably, the network is a server based network.

Alternately, the network is a server less network or peer-to-peer network.

The present invention also envisages a method for delta change synchronization, the method comprising the following steps:
■ providing each of a plurality of nodes with a collaborative means;
■ establishing a model-object collaboration session between the plurality of nodes;
■ rendering an initial model, by at least one of the plurality of nodes, to remainder of the plurality of nodes, the model comprising objects associated with content available at the node, wherein the content is selected from the group consisting of operating system programs, operating system files, means programs, means files, images, videos and combinations thereof;
■ reproducing the content at remainder of the plurality of nodes by the collaborative means using the model;
■ recording the changes, at a first node, in at least some of the objects of the model on occurrence of predefined events;
■ rendering the objects corresponding to the changes to at least one the remainder of the plurality of nodes selectively;
■ modifying the model at least one of the remainder of the plurality of nodes by replacing the objects that have changed with the rendered objects rendered by the first node; and
■ applying the changes to the content, at remainder of the plurality of nodes, corresponding to the model with the replaced rendered objects in the at least one remainder node.

Typically, the step of rendering an initial model, by at least one of the plurality of nodes, to remainder of the plurality of nodes, the model comprising objects associated with content available at the node, wherein the content is selected from the group consisting of operating system programs, operating system files, means programs, means files, images, videos and combinations thereof includes the following step:
■ transmitting the model by a node to remainder or the plurality of nodes.
   Typically, the step of reproducing the content at remainder of the plurality of nodes by the reproducer means and collaborative means using the model includes the following step:
■ receiving by remainder of the plurality of nodes, the transmitted model.
   Typically, the step of rendering the objects corresponding to the changes to remainder of the plurality of nodes includes the following step:
■ transmitting the objects corresponding to the changes by a node to remainder of the plurality of nodes.

Typically, the step of modifying the model at least one of the remainder of the plurality of nodes by replacing the objects that have changed with the rendered objects rendered by the first node includes the following step:
■ receiving by remainder of the plurality of nodes, the transmitted objects.

### BRIEF DESCRIPTION OF THE ACCOMPANYING DRAWINGS

The invention will now be described with the help of accompanying drawings, in which:
**Figure 1** illustrates a system for delta change synchronization in accordance with the present invention;
**Figure 2** illustrates initiation of connection between host node and the client node in accordance with the present invention;
**Figure 3** illustrates establishment of a direct connection between host and the client in accordance with the present invention;
**Figure 4** illustrates initial model rendering from the host node to the client node in accordance with the present invention.
**Figure 5** illustrates the changes in the model occurring at host node in accordance with the present invention;
**Figure 6** illustrates the delta change rendering from the host node and client node in accordance with the present invention;
**Figure 7** illustrates the use of system for delta change synchronization between multiple nodes in accordance with the present invention;
**Figure 8** illustrates the flow diagram of the method for delta change synchronization in accordance with the present invention; and
**Figure 9** illustrates the state flow diagram for delta change synchronization when change in the model has occurred immediately after rendering the initial model in accordance with the present invention.

### DETAILED DESCRIPTION OF THE INVENTION

The drawings and the description thereto are merely illustrative of a system for delta change synchronization and only exemplify the invention and in no way limit the scope thereof.

The invention proposes a system and method for performing collaboration by transferring between two or plurality of nodes, only the changed objects or entities in model-object architecture. Typically, the objects are complex data structures, or abstract data types containing base level information of any application, OS, or any file. The model is basically a group or package of objects formed at any instance.

In accordance with the invention all the participants' nodes are provided with delta change processing sub-systems. The delta change processing sub-system basically performs the function of recording the changes in the objects of the main model and renders them to the other participants.

At first, the model 'M', at the node wanting to become host node or the first node, is shared between all the participants and a copy of model 'M' is stored into the in-core memory remainder of all the participant nodes i.e. other than the host or sender or first node.

Further, changes in the model 'M' at any of the participating node are recorded using delta change processing sub-system and are rendered to the remainder of the participant nodes.

Further at the clients' end, the changes are brought into effect by delta change processing sub-system.

The change recorder means available with the delta change processing sub-system basically performs the function of delta change recording in the model-objects on occurrence of certain events, for e.g. click event, key stroke event and the like.

After completion of collaboration, in case the model and objects correspond to display information, the applicator communicates with the GUI or any other Interface governing the display information to display the changes.

The communication between the session participants is routed through a server using known principles of client-server communication.

In accordance with the invention the nodes form a sender-receiver architecture or host-client architecture. The communication between the nodes is routed through a server in a network using known principles of client-server communication. Also, it is within the scope of the invention to use server based network, server less network or a peer-to-peer network.

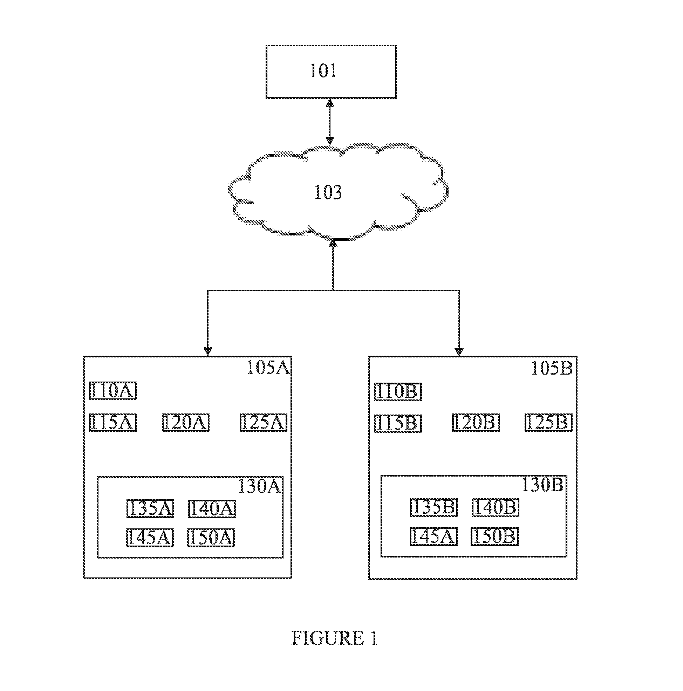

Referring to **figure 1** there is shown a system **100** for delta change synchronization. The system includes plurality of nodes **105** which can be computers, laptops, mobile phones, iPADs, iPODs, and the like. These nodes are interconnected in a network which can be LAN, MAN, WAN, and the like. Further, the nodes communicate with each other and the server using GPRS, Internet, 3G, Wifi, Satellite network and the like.

For clarity and convenience the invention will now be explained using two nodes referred by **105A** and **105B** where the node **105A** is a first node or sender node or the host node and the node **105B** is a client node or receiver node, however, it should be clearly understood by any person skilled in art that there can be a plurality of nodes connected together. Both the nodes **105A** and **105B** include a collaborative means **110A** and **110B** respectively. The collaborative means **110A** establishes a model-object collaboration session with **110B**. For instance, the collaborative means is an application which includes a node authentication means in order to authenticate node before establishing a model-object collaboration session.

Both the nodes are provided with a model generator **115A** and **115B**. However, the node **105A** being the first node or the sender node, generates an initial Model comprising objects associated with content available at the node **105A**.

In accordance with the invention the content can be operating system programs, operating system files, application programs, application files, images, videos, their combinations and the like.

Further, rendering means **120A** and **120B** is provided with the nodes **105A** and **105B** respectively. The rendering means **120A** associated with the node **105A** renders the Model to **105B**. The nodes **105A** and **105B** include content reproducer means **125A** and **125B** respectively and the content reproducer means **125B** available with **105B**, reproduces the content using the Model by co-operating with the collaborative means **110B**.

The rendering means **120A** and **120B** associated with both the nodes **105A** and **105B** includes first transmission means (not shown in figure) to transmit the model to remainder of the nodes. The first transmission means (not shown in figure) associated with the rendering means **120A** of node **105A** transmits the model to node **105B**.

The content reproducer means **125A** and **125B** associated with both the nodes **105A** and **105B** includes first receiving means (not shown in figure) to receive the transmitted model, transmitted by a different node. The first receiving means (not shown in figure) associated with the content reproducer means **125B** of **105B** receives the transmitted model transmitted by node **105A**.

Nodes **105A** and **105B** are provided with a delta change processing sub-system **130A** and **130B** which is used for recording the changes in the models at the sender node and further rendering the changes to other receiver node(s). The delta change processing sub-systems **130A** and **130B** are provided with delta recorder means **135A** and **135B**. The delta recorder **135A** records the changes in objects of the Model on occurrence of predefined events. For instance, these events can be click event, scroll event, stroke event, drag event, text select event, their combinations or any changes occurring due to activities, performed by a node, to modify the content.

Further, a change rendering means **140A** and **140B** is provided. The change rendering means **140A** available with the first node or the sender node **105A** renders the objects corresponding to the changes to the receiver node **105B**.

The nodes **105A** and **105B** are provided with modifying means **145A and 145B** respectively. And the modifying means **145B** available with receiver node **105B** modifies the Model by replacing the objects that have changed with the objects rendered by **105A** using **140A**.

The change rendering means **140A** and **140B** associated with the nodes **105A** and **105B** includes second transmission means (not shown in figure) to transmit the objects corresponding to the changes from to remainder of the plurality of nodes. The second transmission means (not shown in figure) associated with the change rendering means **140A** of node **105A** transmits the objects corresponding to the changes to **105B**.

The modifying means **145A** and **145B** associated with the nodes **105A** and **105B** includes a second receiving means (not shown in figure) to receive the transmitted objects, transmitted by a different node. The second receiving means (not shown in figure) associated with the modifying means **145B** of **105B** receives the transmitted objects by a node**105A**.

Both the nodes **105A** and **105B** are also provided with applicator means **150A** and **150B** respectively, which is used when the nodes is acting as a receiver node. The applicator means **150B** available with **105B** applies the changes to the content corresponding to the Model with replaced objects.

In case the node **105B** further performs some activities on the content due to which the objects of the Models change. The delta recorder means **135B** available with the node **105B** records the changes on the predefined events and renders it to the reminder nodes (in this case **105A**) using a change rendering means **140B**. This change is then provided to the modifying means **145A** available with receiver node **105A** which modifies the Model by replacing the objects that have changed with the objects rendered by **105B** using change rendering means **140B**.

The applicator means **150A** available with **105A** applies the changes to the content corresponding to the Model with replaced objects.

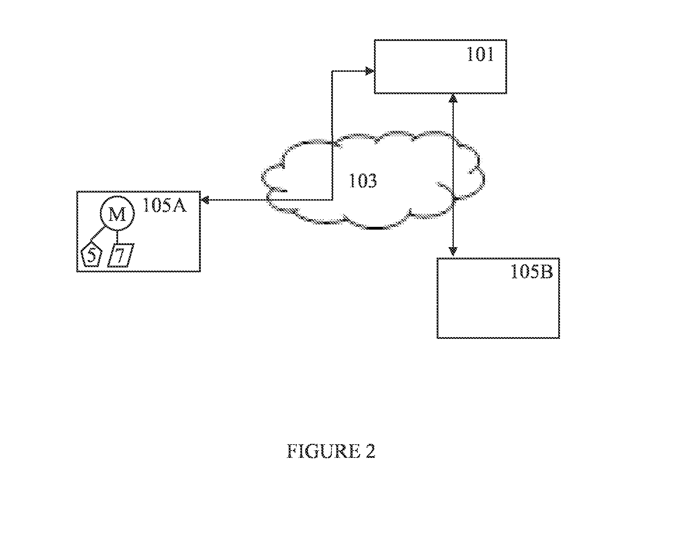

Referring to **Figure 2** there is shown initiation of connection between a host or a first node **105A** and the client node **105B** where both the nodes connect to a server **101**. Also, nodes are authenticated by providing session credentials, for instance, user name, passwords, graphic passwords and the like.

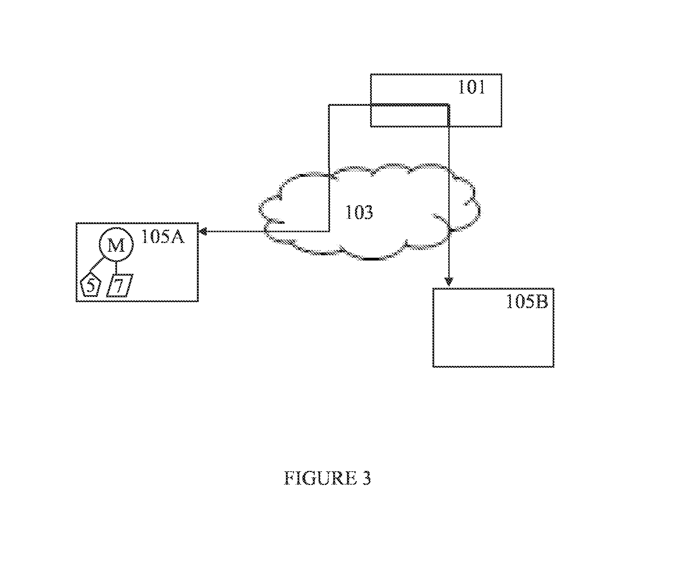

After authentication is done and both the nodes are connected to the server a direct collaboration session is established between the nodes **105A** and **105B** as shown in **figure 3**.

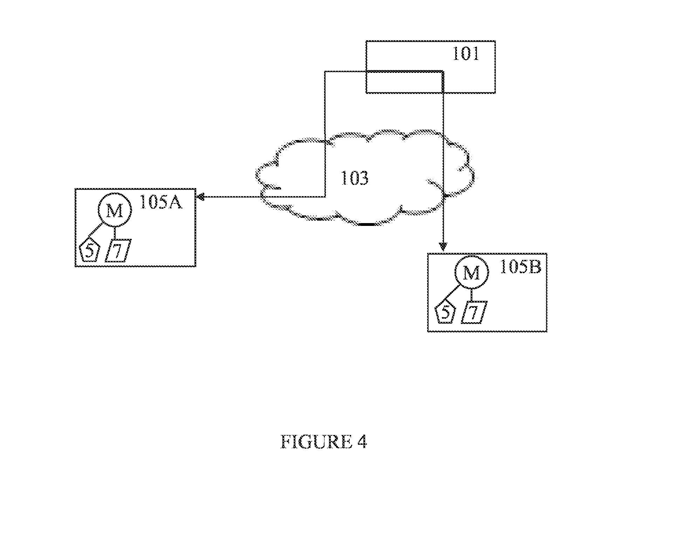

Further, initial model '**M**' comprising objects **5, 7** at the host node **105A** or the first node is rendered to the client node **105B** as shown in **figure 4**.

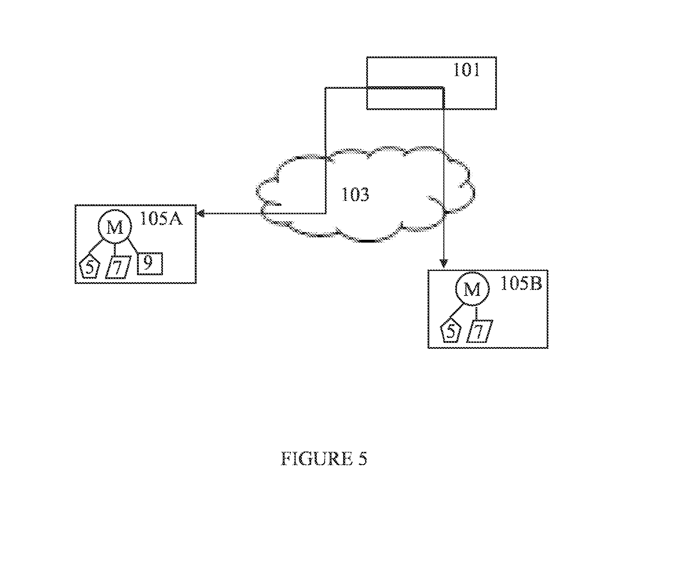

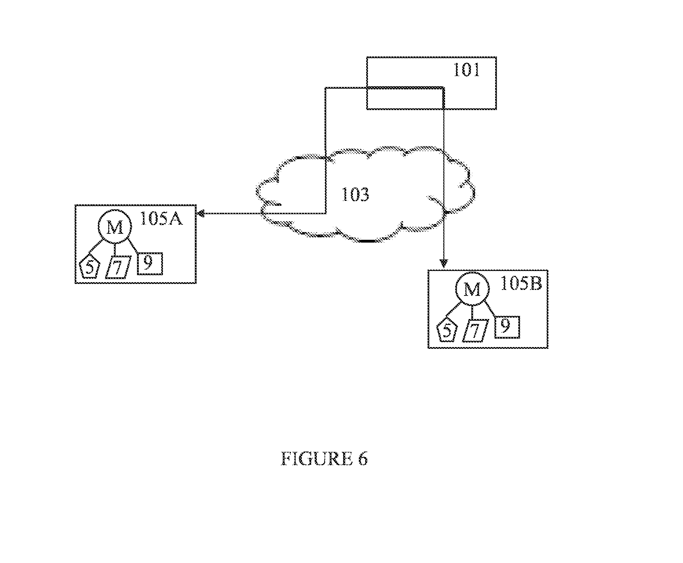

Still further, the changes in the model occurring at host node is recorder i.e. initiation of a new object **9** is recorded at the host node **105A** as shown in **figure 5**. The change or the delta change (i.e only the newly created object **9**) is rendered by the host node **105A** to the client node **105B** as shown in **figure 6**.

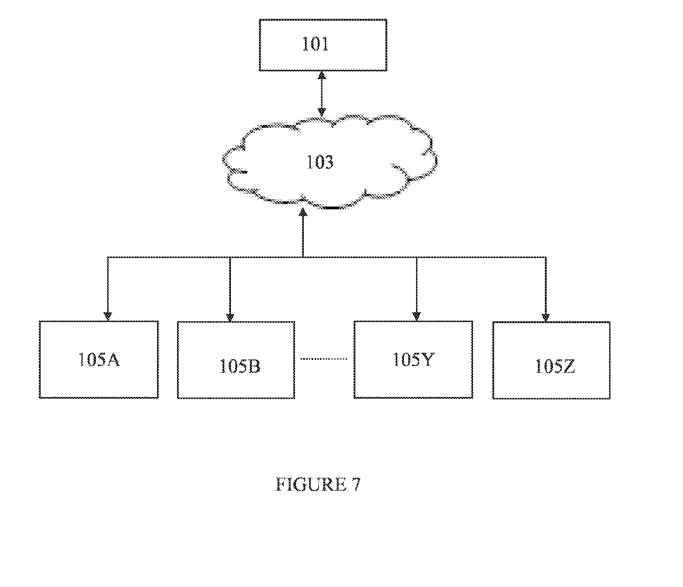

Referring to **figure 7** there is shown the multiple node architecture in accordance with another aspect of the present invention where the multiple nodes **105A, 105B-105Y, 105Z** are simultaneously participating in a collaboration session. Any node can become the sender node or the first node by initiating a model or by rendering the changes in the model shared across multiple participants. However, at any instance of time any one node can be the first node or the sender node and remainder of nodes are the receiver nodes.

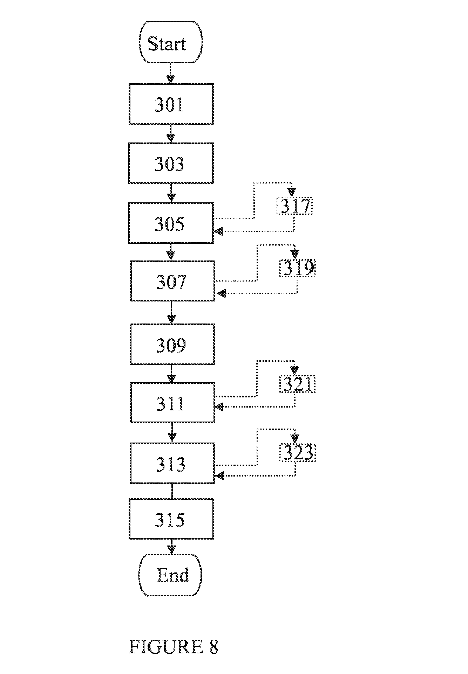

Referring to **figure 8** there is shown a method for Delta Change synchronization, in accordance with the present invention. The method comprises the following steps:
■ providing each of a plurality of nodes with a collaborative means, **301**;
■ establishing a model-object collaboration session between the plurality of nodes, **303**;
■ rendering an initial model, by at least one of the plurality of nodes, to remainder of the plurality of nodes, the model comprising objects associated with content available at the node, wherein the content is selected from the group consisting of operating system programs, operating system files, means programs, means files, images, videos and combinations thereof, **305**;

■ reproducing the content at remainder of the plurality of nodes by the collaborative means using the Model, **307**;
■ recording the changes, at a first node, in at least some of the objects of the Model on occurrence of predefined events, **309**;
■ rendering the objects corresponding to the changes to at least one of the remainder of the plurality of nodes selectively, **311**;
■ modifying the Model at least one of the remainder of the plurality of nodes by replacing the objects that have changed with the rendered objects rendered by the first node, **313**; and
■ applying the changes to the content, at remainder of the plurality of nodes, corresponding to the Model with the replaced rendered objects in the at least one remainder node, **315**.

The step of rendering an initial model, by at least one of the plurality of nodes, to remainder of the plurality of nodes, the model comprising objects associated with content available at the node, wherein the content is selected from the group consisting of operating system programs, operating system files, means programs, means files, images, videos and combinations thereof includes the following step
■ transmitting the model by a node to remainder or the plurality of nodes, **317**.

The step of reproducing the content at remainder of the plurality of nodes by the reproducer means and collaborative means using the model includes the following step
■ receiving by remainder of the plurality of nodes, the transmitted model, **319**.

The step of rendering the objects corresponding to the changes to remainder of the plurality of nodes includes the following step
■ transmitting the objects corresponding to the changes by a node to remainder of the plurality of nodes, **321**.

The step of modifying the model at least one of the remainder of the plurality of nodes by replacing the objects that have changed with the rendered objects rendered by the first node includes the following step
■ receiving by remainder of the plurality of nodes, the transmitted objects, **323**.

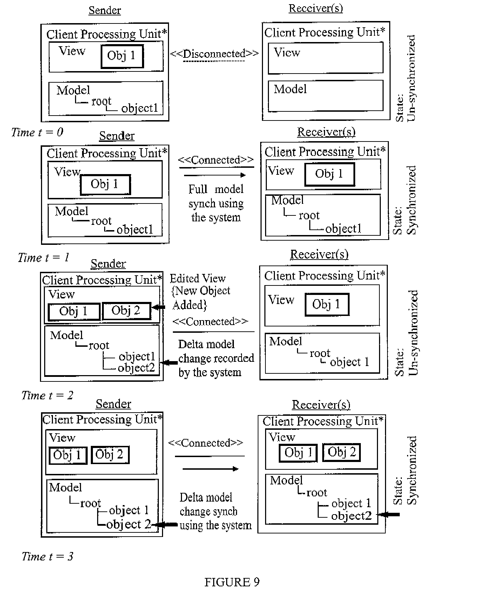

Referring to figure 9 there is illustrated the flow of the Model containing objects between the nodes **105A** and **105B** at different instances of time.

The Model "M" is generated at the first node **105A** at a time period ***t=0*** which after establishing of collaboration session (i.e. in a synchronized state) is rendered to the participant node **105B** at a time period ***t*=*1*** correspondingly the content corresponding to the object is visible to the user of participant node **105B**.

Further, at time period ***t=2*** the model at the first node **105A** is changed due to change (delta change) in the content and a corresponding new object is created which is recorder by a delta change recorder means.

At time period ***t=3*** the delta change is rendered to the participant node **105B** which using a modifying means is reflected in the Model "M" at the participant node **105B**. An applicator means then applies the changes in the view on participant node **105B**.

In accordance with an exemplary embodiment of the present invention there is illustrated working of the system for delta change synchronization for image modification.

A first node or the sender node creates a model for face modification application (i.e. application program) wherein the objects are the image of man to be modified, and its attributes. For instance, these attributes can be the facial structure, color of eyes, hair style and the like. The first node then renders the model to remainder of said plurality of nodes connected with said first node.

Now, in case a second node changes some of the attributes of the image, say adds a *French beard,* the change will cause corresponding changes in objects and the model. These changes in objects and model will be recorded by delta change processing sub-system at the second node using a delta recorder means. The recorded changes are rendered to at least one of the remainder of the connected nodes. The rendering can be done selectively to some nodes or to all the nodes.

Further, the rendered changes are used by the modifying means at the remainder of the connected nodes which have been rendered with the changes, to modify the models at the nodes and the applicator means changes the image attribute by displaying a *French beard* on the image.

### TECHNICAL ADVANTAGES

The technical advantages of the present invention include in providing:
■ a system and method which transfers the base level information of any application, OS, system application, and files to a remote node;
■ a system and method which is not limited to transfer of the image or video signals for remote screen sharing;
■ a system and method which can reduce the size of the data to be transferred in remote collaboration;
■ a system and method which can provide real time or near real time updates on the receiver's machine; and
■ a time efficient, cost efficient and space efficient system for remote collaboration.
While considerable emphasis has been placed herein on the particular features of this invention, it will be appreciated that various modifications can be made, and that many changes can be made in the preferred embodiment without departing from the principles of the invention. These and other modifications in the nature of the invention or the preferred embodiments will be apparent to those skilled in the art from the disclosure herein, whereby it is to be distinctly understood that the foregoing descriptive matter is to be interpreted merely as illustrative of the invention and not as a limitation.

## Claims

1. A system for delta change synchronization, said system comprising a plurality nodes, **characterized in that** each of said plurality of nodes is provided with
■ collaborative means adapted to establish a model-object collaboration session with remainder of said plurality of nodes via a network using a server;
■ model generator adapted to generate an initial model comprising objects associated with content, wherein said content is selected from the group consisting of operating system programs, operating system files, means programs, means files, images, videos and combinations thereof;
■ rendering means adapted to render said model to the remainder of said plurality of nodes;
■ content reproducer means adapted to co-operate with said collaborative means to reproduce the content;
■ a delta change processing sub-system comprising:
■ delta recorder means adapted to record the changes in a first node in at least some of said objects of said model in said first node on occurrence of predefined events;
● change rendering means adapted to render the objects corresponding to the changes to at least one of the remainder of said plurality of nodes selectively;
● modifying means adapted to modify the model, on said at least one remainder node, by replacing the objects that have changed with the objects rendered by the first node; and
● applicator means adapted to apply the changes to the content corresponding to the model with replaced objects in the at least one remainder node.

2. The system as claimed in claim 1, wherein the objects contain base level information of the content, said base level information including complex data structures, abstract data types, binary tree structure, linked lists, stacks, queues, functions, RGB information, display information and any combinations thereof.

3. The system as claimed in claim 1, wherein said rendering means associated with each of said plurality of node includes first transmission means adapted to transmit said model to remainder or said plurality of nodes.

4. The system as claimed in claim 1, wherein said content reproducer means associated with each of said plurality of nodes includes first receiving means adapted to receive the transmitted model, transmitted by a different node.

5. The system as claimed in claim 1, wherein said change rendering means associated with each of said plurality of nodes includes second transmission means adapted to transmit the objects corresponding to the changes from a node to remainder of said plurality of nodes.

6. The system as claimed in claim 1, wherein said modifying means associated with each of said plurality of nodes includes second receiving means adapted to receive the transmitted objects, transmitted by a different node.

7. The system as claimed in claim 1, wherein said collaborative means is an application **characterized in that** node authentication means is adapted to authenticate a node before establishing a model-object collaboration session.

8. The system as claimed in claim 1, wherein said plurality of nodes form a host-client architecture.

9. The system as claimed in claim 1 and claim 8, wherein at any instance the node which renders the model or the objects corresponding to the changes is the host node and the remainder of said plurality of nodes are the client nodes.

10. The system as claimed in claim 1, wherein said predefined events are changes occurring due to activities, performed by a node, to modify the content, said predefined events selected from the group consisting of on click event, on scroll event, on drag event, text select event and combinations thereof.

11. A method for delta change synchronization, said method comprising the following steps:
■ providing each of a plurality of nodes with a collaborative means;
■ establishing a model-object collaboration session between said plurality of nodes;
■ rendering an initial model, by at least one of said plurality of nodes, to remainder of said plurality of nodes, said model comprising objects associated with content available at said node, wherein said content is selected from the group consisting of operating system programs, operating system files, means programs, means files, images, videos and combinations thereof;
■ reproducing the content at remainder of said plurality of nodes by said reproducer means and said collaborative means using the model;
■ recording the changes, at a first node, in at least some of said objects of said model on occurrence of predefined events;
■ rendering the objects corresponding to the changes to at least one of the remainder of said plurality of nodes selectively;
■ modifying the model at least one of the remainder of said plurality of nodes by replacing the objects that have changed with the rendered objects rendered by the first node; and
■ applying the changes to the content, at remainder of said plurality of nodes, corresponding to the model with the replaced rendered objects in the at least one remainder node.

12. The method as claimed in claim 11, wherein the step of rendering an initial model, by at least one of said plurality of nodes, to remainder of said plurality of nodes, said model comprising objects associated with content available at said node, wherein said content is selected from the group consisting of operating system programs, operating system files, means programs, means files, images, videos and combinations thereof includes the following step:
■ transmitting said model by a node to remainder or said plurality of nodes.

13. The method as claimed in claim 11, wherein the step of reproducing the content at remainder of said plurality of nodes by said reproducer means and collaborative means using the model includes the following step:
■ receiving by remainder of said plurality of nodes, the transmitted model.

14. The method as claimed in claim 11, wherein the step of rendering the objects corresponding to the changes to remainder of said plurality of nodes includes the following step:
■ transmitting the objects corresponding to the changes by a node to remainder of said plurality of nodes.

15. The method as claimed in claim 11, wherein the step of modifying the model at least one of the remainder of said plurality of nodes by replacing the objects that have changed with the rendered objects rendered by the first node includes the following step:
■ receiving by remainder of said plurality of nodes, the transmitted objects.
